# EUROPÄISCHE PATENTANMELDUNG

(11) **EP 4 400 231 A1**
(43) Veröffentlichungstag der Anmeldung: **17.07.2024**
(21) Anmeldenummer: 23151285.6
(22) Anmeldetag: 12.01.2023
(51) Int. Cl.: B21D 53/04, F28D 9/00, B23P 15/26

(54) **VERFAHREN ZUR HERSTELLUNG EINES PLATTENWÄRMETAUSCHERS**

(71) Anmelder: Brasseur, Olivier, 40472 Düsseldorf (DE)
(72) Erfinder: Brasseur, Olivier, 40472 Düsseldorf (DE)
(74) Vertreter: Brinkmann & Partner

(57) **Zusammenfassung**

Die Erfindung betrifft ein Verfahren zur Herstellung eines Plattenwärmetauschers aus zu einem Plattenstapel miteinander verbundenen Einzelplatten mit wenigstens den folgenden Verfahrensschritten:
- Bereitstellen von Blechtafeln mit eben ausgebildeten Großflächen,
- Abkanten der Blechtafeln entlang einer in Längsrichtung verlaufenden Randkante, wobei je Blechtafel eine in Längsrichtung verlaufende Falz ausgebildet wird,
- Ausbilden eines Plattenpaares, indem zwei Einzelplatten jeweils in Form einer der zuvor abgekanteten Blechtafeln in Stapelrichtung des späteren Plattenstapels übereinander angeordnet und miteinander verschweißt werden, wobei die beiden Einzelplatten mit ihren jeweiligen Falzen einander zugewandt werden, so dass eine Falz der einen Einzelplatte einer freien Randkante der anderen Einzelplatte zugeordnet wird und wobei die beiden Einzelplatten entlang ihrer jeweiligen Falzen und der damit zusammenwirkenden freien Randkanten miteinander verschweißt werden.
- Ausbilden eines Plattenstapels, indem wenigstens zwei Plattenpaare in Stapelrichtung des späteren Plattenstapels übereinander angeordnet und miteinander verschweißt werden, wobei die beiden Plattenpaare unter Zwischenordnung eines entlang einer ersten Längskante verlaufenden ersten Abstandshalters und eines entlang einer zweiten Längskante verlaufenden zweiten Abstandshalters übereinander angeordnet werden und wobei die Abstandshalter jeweils mit den dazu benachbarten Plattenpaaren verschweißt werden.

## Beschreibung

Die Erfindung betrifft ein Verfahren zur Herstellung eines Plattenwärmetauschers aus einer Vielzahl von zu einem Plattenstapel miteinander verbundener Einzelplatten.

Plattenwärmetauscher sind aus dem Stand der Technik beispielsweise aus der DE 10 2020 120 708 A1 bekannt.

Solche Plattenwärmetauscher sind im Kern aus Einzelplatten und jeweils einer Mehrzahl von zwischen den Einzelplatten angeordneten Abstandshaltern zu einem Plattenstapel zusammengesetzt. Diese Plattenwärmetauscher haben sich in der Praxis dem Grunde nach bewährt.

Die Herstellung der Plattenwärmetauscher zeichnet sich jedoch im negativen Sinne durch einen hohen Energiebedarf aus. Dies insbesondere deshalb, da eine Vielzahl von Bauteilen miteinander verschweißt werden müssen.

In Zeiten der Rohstoffknappheit und der steigenden Energiepreise besteht ein vitales industrielles Interesse daran, Plattenwärmetauscher in energieeffizienter Weise herzustellen.

Ausgehend von dem Vorbeschriebenen liegt der Erfindung daher die **Aufgabe** zugrunde, ein Verfahren zur Herstellung eines eingangs beschriebenen Plattenwärmetauschers anzugeben, welches hinsichtlich des Ressourcenverbrauchs und des Energiebedarfs verbessert ist.

Zur **Lösung** der Aufgabe schlägt die Erfindung ein Verfahren zur Herstellung eines Plattenwärmetauschers aus zu einem Plattenstapel miteinander verbundenen Einzelplatten vor, mit wenigstens den folgenden Verfahrensschritten:
- Bereitstellen von Blechtafeln mit eben ausgebildeten Großflächen,
- Abkanten der Blechtafeln entlang einer in Längsrichtung verlaufenden Randkante, wobei je Blechtafel ein in Längsrichtung verlaufender Falz, insbesondere Stehfalz, ausgebildet wird,
- Ausbilden eines Plattenpaares, indem zwei Einzelplatten jeweils in Form einer der zuvor abgekanteten Blechtafeln in Stapelrichtung des späteren Plattenstapels übereinander angeordnet und miteinander verschweißt werden, wobei die beiden Einzelplatten mit ihren jeweiligen Falzen einander zugewandt werden, so dass der eine Falz der einen Einzelplatte einer freien Randkante der anderen Einzelplatte zugeordnet wird und wobei die beiden Einzelplatten entlang ihrer jeweiligen Falzen und der damit zusammenwirkenden freien Randkanten miteinander verschweißt werden.
- Ausbilden eines Plattenstapels, indem wenigstens zwei Plattenpaare in Stapelrichtung des späteren Plattenstapels übereinander angeordnet und miteinander verschweißt werden, wobei die beiden Plattenpaare unter Zwischenordnung eines entlang einer ersten Längskante verlaufenden ersten Abstandshalters und eines entlang einer zweiten Längskante verlaufenden zweiten Abstandshalters übereinander angeordnet werden und wobei die Abstandshalter jeweils mit den dazu benachbarten Plattenpaaren verschweißt werden.

Darüber hinaus schlägt die Erfindung zur **Lösung** der Aufgabe ein Verfahren zur Herstellung eines Plattenwärmetauschers aus zu einem Plattenstapel miteinander verbundenen Einzelplatten vor, mit wenigstens den folgenden Verfahrensschritten:
- Bereitstellen von Blechtafeln mit eben ausgebildeten Großflächen,
- Abkanten wenigstens eines Teils der Blechtafeln jeweils entlang zweier in Längsrichtung verlaufender gegenüberliegender Randkanten, wobei die beiden Randkanten in entgegengesetzter Richtung abgekantet werden, wobei je Blechtafel zwei parallel zueinander verlaufende und sich in entgegengesetzter Richtung von der Tafelebene aus erstreckende Falzen, insbesondere Stehfalzen, ausgebildet werden.
- Ausbilden eines Plattenstapels, indem Einzelplatten jeweils in Form einer der zuvor beidseitig abgekanteten Blechtafeln in Stapelrichtung des späteren Plattenwärmetauschers übereinander angeordnet und miteinander verschweißt werden, wobei die Einzelplatten mit ihren jeweiligen Falzen jeweils in identischer Ausrichtung übereinander angeordnet werden, so dass die Falzen einer Einzelplatte den jeweiligen freien Biegekanten der unmittelbar darüber und darunter angeordneten Einzelplatte zugeordnet werden und wobei die beiden Einzelplatten entlang ihrer jeweiligen Falzen und der damit zusammenwirkenden freien Biegekanten miteinander verschweißt werden.

Beiden erfindungsgemäßen Verfahren wohnt die gemeinsame erfinderische Idee inne, durch Abkanten von ebenen Blechtafeln, die die späteren Einzelplatten des Plattenwärmetauschers bilden, die Zahl der einzusetzenden und zu verschweißenden Abstandshalter gegenüber dem Stand der Technik, vorzugsweise bis auf null, zu reduzieren. Erreicht wird dies in beiden Fällen dadurch, dass die an den Einzellatten ausgebildeten Falze die Funktion der vormals benötigten separaten Abstandshalter übernehmen. Hierdurch werden die Zahl der erforderlichen Schweißnähte und der damit verbundene Verfahrens- und Energieaufwand in beiden Fällen in vorteilhafter Weise erheblich reduziert.

"Abkanten" im Sinne der Erfindung bezeichnet ein Fertigungsverfahren aus dem Bereich der Blechumformung, bei dem ein Flächenteil einer Blechtafel gegenüber einem verbleibenden ebenen Flächenteil um einen Biegewinkel gebogen wird. Dabei bildet der umgebogene Flächenteil einen Falz. Der unmittelbar an den Falz anliegende Teil des verbliebenen ebenen Flächenteils wird im Sinne der Erfindung als "freie Biegekante" bezeichnet. Durch einfaches Abkanten in einem Biegewinkel von 90° wird ein "Stehfalz" erhalten. Für die Erfindung sind prinzipiell Biegewinkel von 30° bis 90° bevorzugt, da die resultierenden Falzen einerseits mechanisch vergleichsweise stabil sind und eine einfache Verschweißung mit einer freien Randkante oder einer freien Biegekante erlaubt. Vorzugsweise werden alle eingesetzten Blechtafeln mit dem gleichen Biegewinkel abgekantet, um einen symmetrisch aufgebauten und mechanisch stabilen Plattenstapel zu erhalten.

Gemäß einem bevorzugten Merkmal der Erfindung ist vorgesehen, dass sofern Abstandshalter eingesetzt werden, solche Abstandshalter verwendet werden, die wenigstens teilweise aus austenitischem Edelstahl gebildet sind. Verfahrenstechnisch ist dies mit Hinblick auf Verfügbarkeit und Schweißeigenschaften von Vorteil. Vorzugsweise können die Abstandshalter aus verschiedenen Materialien gebildet sein. Insbesondere kann ein Materialwechsel in Strömungsrichtung des Mediums erfolgen. Dabei ist es vorgesehen, dass im Bereich des Strömungseinlasses ein korrosionsbeständiger Edelstahl als Material für den Abstandshalter gewählt wird, während in einem vorgebbaren Abstand zur Strömungseinlass ein austenitischer Edelstahl als Material für den Abstandshalter gewählt wird. Zwischen den beiden Materialien wird vorzugsweise eine graduelle Grenzschicht ausgebildet.

Gemäß einem bevorzugten Merkmal der Erfindung ist vorgesehen, dass sofern Abstandshalter eingesetzt werden, solche Abstandshalter verwendet werden, die einen quaderförmigen Querschnitt, einen L-förmigem Querschnitt oder einen C-förmigen Querschnitt aufweisen. Im Falle eines quaderförmigen Querschnitts sind die Abstandshalter in Form eines Metallstreifens, insbesondere Blechstreifens ausgebildet. Vorteilhafterweise sind solche Abstandshalter einfach zu verarbeiten. L-förmige oder C-förmige Querschnitte bieten demgegenüber eine erhöhte mechanische Stabilität. Darüber hinaus ergeben sich synergetische Vorteile bei der Verwendung solcher Abstandshalter, da sie durch Abkanten und/oder Schneiden hergestellt werden können. Vorzugsweise werden die Abstandshalter daher aus den gleichen Blechtafeln hergestellt wie die Einzelplatten des Plattenwärmetauschers. Hierzu können die Blechtafeln zunächst abgekantet und anschließend in Streifen- bzw. Profilform geschnitten werden. Alternativ wird die Blechtafel zunächst in Streifen geschnitten und anschließend abgekantet.

Auch Abstandshalter mit komplexem Querschnitt können bevorzugt sein. Ein komplexer Querschnitt ist im Sinne der Erfindung ein solcher, der wenigstens zwei voneinander verschiedene Biegewinkel aufweist und zu diesem Zweck wenigstens zweifach abgekantet wird. Vorzugsweise wird der Querschnitt des Abstandshalter an die Kontur der bestimmungsgemäß einander zugewandten Oberflächen der benachbarten Plattenpaare biegetechnisch derart angepasst. Vorzugsweise erfolgt eine Anpassung derart, dass die jeweiligen einander zugewandten Flächen der Plattenpaare einerseits und des Abstandshalters andererseits verlaufstechnisch miteinander korrelieren.

Für den Fall der Verfahrensführung, unter Verwendung von Einzelplatten in Form von beidseitig abgekanteten Blechtafeln erfolgt, kann prinzipiell gänzlich auf den Einsatz von separaten Abstandshaltern verzichtet werden.

Die Erfindung umfasst jedoch ausdrücklich auch eine solche Ausgestaltung in der der Plattenstapel teilweise aus über Abstandshalter verbundenen Plattenpaaren und teilweise aus beidseitig abgekanteten Einzelplatten gebildet ist. Aus technischer Sicht kann es vorteilhaft sein, den in Stapelrichtung unteren Teil des Plattenstapels, insbesondere das unterste Drittel, auf welchem bei bestimmungsgemäßer Aufstellung der Großteil des Gewichts des Plattenstapels lastet, in erfindungsgemäßer Weise aus Plattenpaaren und Abstandshaltern auszubilden. Der untere Teil des Plattenstapels weist dann eine erhöhte mechanische Stabilität auf. Der in Stapelrichtung obere Teil des Plattenstapels kann demgegenüber vorzugsweise aus in erfindungsgemäßer Weise miteinander verbundenen beidseitig abgekanteten Einzelplatten gebildet sein. Der Verbindungsbereich wird vorzugsweise dadurch gebildet, dass ein Plattenpaar und eine beidseitig abgekantete Einzelplatte in Stapelrichtung des späteren Plattenstapels übereinander angeordnet und miteinander verschweißt werden. Das Plattenpaar und die Einzelplatte werden unter Zwischenordnung eines entlang einer ersten Längskante verlaufenden Abstandshalters und eines entlang einer zweiten Längskante verlaufenden Falz der Einzelplatte übereinander angeordnet. Dann wird der Abstandshalter mit dem Plattenpaar einerseits und dem freien Biegerand der Einzelplatte andererseits verschweißt. Der Falz der Einzelplatte wird mit dem Plattenpaar verschweißt. Hierdurch weist der obere Teil des Plattenstapels ein vergleichsweise geringes Gewicht auf. Insgesamt wird durch diese Verfahrensführung ein mechanisch besonders stabiler Plattenstapel gebildet. Hierbei werden zunächst die jeweiligen ebenen Blechtafeln derart bemessen und abgekantet, dass die einander zugewandten ebenen Flächen der einseitig und beidseitig abgekanteten Blechtafeln identische Abmessungen aufweisen.

Für den Fall, dass der Plattenstapel wenigstens teilweise aus übereinander angeordneten beidseitig abgekanteten Einzelplatten gebildet wird, umfasst das Verfahren vorzugsweise auch das Abschließen des Plattenstapels. Dies kann prinzipiell auf zwei verschiedene Arten erfolgen. Gemäß einer ersten bevorzugten Ausführungsform wird die sich vom Plattenstapel weg erstreckende Falz wenigstens einer der beiden in Stapelrichtung des Plattenstapels äußersten Einzelplatten des Plattenstapels auf die Höhe der anliegenden freien Biegekante abgelängt. Besonders bevorzugt kann dies mit der in Stapelrichtung obersten und untersten Einzelplatte zur vollständigen Abschließung des Plattenstapels durchgeführt werden. Hierdurch wird sichergestellt, dass die Einzelplatten keine überstehenden Falzen aufweisen, wodurch die Verletzungsgefahr für den Benutzer und die Einbauhöhe des Plattenstapels reduziert werden. Vorzugsweise kann auf verschiedene Arten abgelängt werden. Bevorzugt mittels Schneiden, Fräsen, Sägen und/oder Schleifen.

Gemäß einer zweiten bevorzugten Ausführungsform, die in Kombination mit der ersten Ausführungsform oder als Alternative anwendbar ist, wird zunächst wenigstens eine zusätzliche Blechtafel entlang nur einer in Längsrichtung verlaufenden Randkante abgekantet, wobei je Blechtafel eine in Längsrichtung verlaufende Falz, insbesondere Stehfalz, ausgebildet wird. Anschließend wird der Plattenstapel wenigstens einseitig abgeschlossen, indem wenigstens eine Abschlussplatte in Form einer zuvor einseitig abgekanteten Blechtafel mit einer in Stapelrichtung des Plattenstapels äußersten Einzelplatte mit ihren jeweiligen Falzen einander zugewandt werden, so dass die Falz der Abschlussplatte einer freien Biegekante der Einzelplatte zugeordnet wird und so dass die Falz der Einzelplatte der freien Randkante der Abschlussplatte zugeordnet wird, wobei die Abschlussplatte und die Einzelplatten entlang ihrer jeweiligen Falzen und der damit jeweils zusammenwirkenden freien Biegekante oder freien Randkante miteinander verschweißt werden. Besonders bevorzugt kann dieser Vorgang mit der in Stapelrichtung obersten und untersten Einzelplatte zur vollständigen Abschließung des Plattenstapels durchgeführt werden. Hierdurch wird sichergestellt, dass der Plattenstapel keine überstehenden Falzen aufweist, wodurch die Verletzungsgefahr für den Benutzer und die Einbauhöhe des Plattenstapels reduziert werden. Auch eine Kombination beider Ausführungsformen ist möglich, indem beispielsweise der überstehende Falz der untersten Einzelplatte gemäß der ersten Ausführungsform abgelängt wird und auf die oberste beidseitig abgekantete Einzelplatte eine einseitig abgekanteten Einzelplatte gemäß der zweiten Ausführungsform aufgeschweißt wird.

Erfindungsgemäß reichen die freien Kanten des abgekanteten Teils der Einzelplatte aus, um eine ausreichende Schweißnaht auszubilden und die notwendige Stabilität des Plattenstapels bereitzustellen. Es kann jedoch insbesondere bei höheren Plattenstapeln bevorzugt sein, eine breitere Anlagefläche zwischen dem abgekanteten Teil der Einzelplatte und der schweißtechnisch korrespondierenden freien Randkante oder der freien Biegekante auszubilden, um die Stabilität der Schweißverbindung zu erhöhen. Gemäß einem bevorzugten Merkmal der Erfindung ist daher vorgesehen, dass wenigstens ein Teil der mittels Abkanten erzeugten Falzen der Einzelplatten wenigstens einmal entlang ihrer in Längsrichtung verlaufenden freien Randkanten zur Erzeugung einer Kontaktfläche mit wenigstens einer benachbarten Einzelplatte erneut abgekantet werden. Verschiedene Geometrien sind dabei möglich. Eine Möglichkeit besteht darin den Falz bezogen auf die jeweilige Flächennormale in gleicher Richtung der ersten Abkantung zu biegen. Eine andere Möglichkeit besteht darin, den Falz bezogen auf die jeweilige Flächennormale in entgegengesetzter Richtung der ersten Abkantung zu biegen. Vorzugsweise wird jedoch mit gleichem Winkel der ersten Abkantung erneut abgekantet. Hierdurch wird gewährleistet, dass sich die jeweilige Kontaktfläche parallel zum verbleibenden ebenen Flächenteil der Einzelplatte erstreckt. Wird in gleicher Richtung der ersten Abkantung erneut gebogen, so betragen die Biegewinkel der ersten und der zweiten Abkantung vorzugsweise 90°. Wird in entgegengesetzter Richtung der ersten Abkantung erneut gebogen, so betragen die Biegewinkel der ersten und der zweiten Abkantung vorzugsweise zwischen 30° und 90°.

Als weitere Maßnahme zur Erhöhung der mechanischen Stabilität des Plattenstapels ist gemäß einem bevorzugten Merkmal der Erfindung ist vorgesehen, dass eine Mehrzahl von konischen Metallelementen zwischen benachbarten Einzelplatten und/oder zwischen benachbarten Plattenpaaren angeordnet werden. Insbesondere bei großen ebenen Flächenteilen der Einzelplatten ist dies von Vorteil, um eine Wölbung der Flächenteile in randfernen Bereichen zu minimieren oder ganz zu vermeiden. Dabei ist vorzugsweise vorgesehen, dass die Länge der Metallelemente so gewählt wird, dass sie im Wesentlichen dem Abstand zwischen zwei benachbarten Einzelplatten oder zwei benachbarten Plattenpaaren entspricht. Hierdurch kann eine Wölbung in Gänze unterbunden werden. Die konischen Metallelemente sind bevorzugt nach Art eines Kegelstumpfes ausgebildet. Vorzugsweise weisen sie dabei jeweils einendseitig eine Grundfläche und andernendseitig eine Deckfläche auf. Umfangsseitig weisen die konischen Metallelemente eine umlaufende Mantelfläche auf, welche Grundfläche und Deckfläche miteinander verbindet. Bevorzugt werden die konischen Metallelemente jeweils mit ihrer Grundfläche auf eine ebene Großfläche einer Einzelplatte aufgeschweißt. Die ausschließliche Verschweißung der Grundfläche ist in der Regel ausreichend, so dass auf eine zusätzliche Verschweißung der Deckfläche verzichtet werden kann. Darüber hinaus ist in dieser Ausgestaltung eine relative Verschiebung, beispielsweise in Folge einer temperaturinduzierten Materialbewegung, zwischen den Einzelplatten und/oder den Plattenpaaren möglich, so dass in vorteilhafter Weise Materialspannungen vermieden werden.

Gemäß einem besonders bevorzugten Merkmal der Erfindung ist vorgesehen, dass die Mehrzahl der konischen Metallelemente in einer regelmäßigen Verteilung zum Teil auf der einen und zum Teil auf der anderen ebenen Großfläche der einander zugewandten Einzelplatten aufgeschweißt wird. Dies erleichtert den Fertigungsprozess, da nur eine Art von Einzelplatten hergestellt werden muss.

Die Erfindung wird nachfolgend anhand von konkreten Ausführungsbeispielen beschrieben. Dabei zeigen
- Fig.1: ein aus dem Stand der Technik bekanntes Verfahren zur Herstellung eines aus dem Stand der Technik bekannten Plattenwärmetauschers;
- Fig.2: eine Herstellung einer erfindungsgemäßen Einzelplatte gemäß einem erfindungsgemäßen Verfahren zur Herstellung eines Plattenwärmetauschers gemäß einer ersten Ausführungsform;
- Fig.3: eine Bildung von Plattenpaaren und eines Plattenstapels gemäß der ersten Ausführungsform des erfindungsgemäßen Verfahrens zur Herstellung eines Plattenwärmetauschers;
- Fig.4: eine Herstellung einer erfindungsgemäßen Einzelplatte gemäß einem erfindungsgemäßen Verfahren zur Herstellung eines Plattenwärmetauschers gemäß einer zweiten Ausführungsform;
- Fig.5: eine Bildung eines Plattenstapels gemäß der zweiten Ausführungsform des erfindungsgemäßen Verfahrens zur Herstellung eines Plattenwärmetauschers;
- Fig.6: eine Bildung eines Plattenstapels gemäß einer dritten Ausführungsform des erfindungsgemäßen Verfahrens zur Herstellung eines Plattenwärmetauschers;
- Fig.7: ein erfindungsgemäßes Abschließen eines gemäß Figur 5 oder Figur 6 gebildeten Plattenstapels gemäß einer ersten Ausführungsform;
- Fig.8: ein erfindungsgemäßes Abschließen eines gemäß Figur 5 oder Figur 6 gebildeten Plattenstapels gemäß einer zweiten Ausführungsform;
- Fig.9: eine Herstellung einer weiteren erfindungsgemäßen Einzelplatte zur Verwendung in dem erfindungsgemäßen Verfahren gemäß der ersten Ausführungsform;
- Fig.10: eine Bildung von Plattenpaaren und eines Plattenstapels gemäß der ersten Ausführungsform des erfindungsgemäßen Verfahrens mit Einzelplatten gemäß Fig.9;
- Fig.11: eine Herstellung einer weiteren erfindungsgemäßen Einzelplatte zur Verwendung in dem erfindungsgemäßen Verfahren gemäß der ersten Ausführungsform;
- Fig.12: eine Bildung von Plattenpaaren und eines Plattenstapels gemäß der ersten Ausführungsform des erfindungsgemäßen Verfahrens mit Einzelplatten gemäß Fig.11;
- Fig.13: eine Herstellung einer weiteren erfindungsgemäßen Einzelplatte zur Verwendung in dem erfindungsgemäßen Verfahren gemäß der ersten Ausführungsform;
- Fig.14: eine Bildung von Plattenpaaren und eines Plattenstapels gemäß der ersten Ausführungsform des erfindungsgemäßen Verfahrens mit Einzelplatten gemäß Fig.13;
- Fig.15: eine Bildung eines Plattenpaares gemäß der ersten Ausführungsform des erfindungsgemäßen Verfahrens aus Einzelplatten aufweisend zusätzlich Abstandshalter in Form konischer Metallelemente.

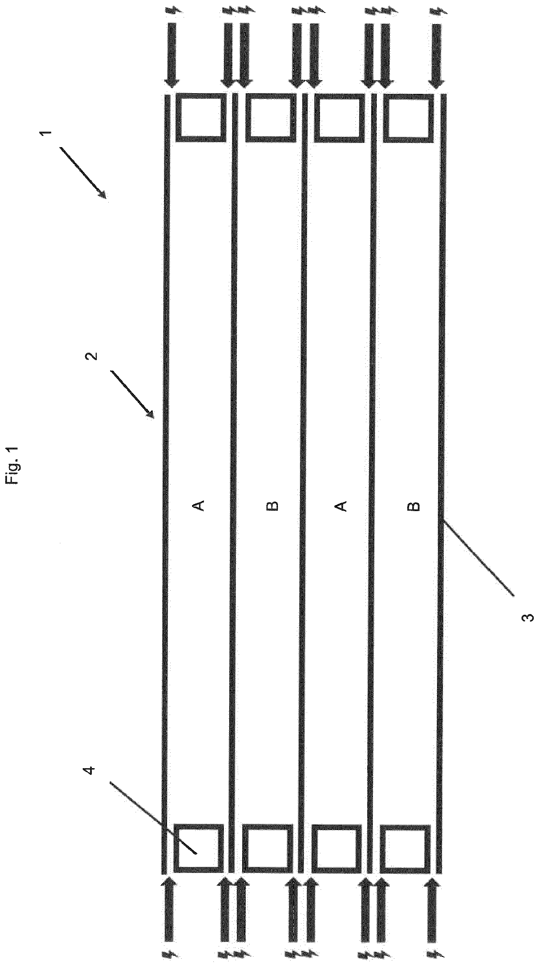

Figur 1 zeigt in schematischer Ansicht ein aus dem Stand der Technik bekanntes Verfahren zur Herstellung eines Plattenwärmetauschers 1. Figur 1 zeigt die Bauteile des Plattenwärmetauschers 1 in Frontalansicht mit Blick auf die Strömungskanäle A, B.

Demgemäß wird ein Plattenstapel 2 aus einer Vielzahl Einzelplatten 3 und einer Vielzahl Abstandshaltern 4 gebildet. Zwischen den Einzelplatten werden dabei abwechselnd Strömungskanäle A, B für zwei verschiedene fluide Medien gebildet.

Dabei werden zwei ebene Einzelplatten 3, welche beispielsweise aus Blech gebildet sind zur Ausbildung eines Strömungskanals A, B unter Zwischenordnung von zwei Abstandshaltern 4 miteinander verschweißt. Pro Strömungskanal sind nach diesem Verfahren insgesamt vier Schweißvorgänge zur Bildung entsprechender Schweißnähte erforderlich. Zur Bildung des Plattenstapels sind demzufolge eine Vielzahl von Schweißungen 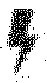 an einer Vielzahl von mit schwarzen Pfeilen markierten Schweißstellen erforderlich.

Wenngleich sich dieser Aufbau dem Grunde nach bewährt hat, ist dieses Verfahren durch die Vielzahl an erforderlichen Schweißvorgängen vergleichsweise aufwändig und benötigt vergleichsweise viel Energie.

Die verschiedenen Ausgestaltungen des erfindungsgemäßen Verfahrens zielen nun darauf ab, die Anzahl der benötigten Schweißvorgänge zur Bildung eines Plattenstapels 2 zu reduzieren, um auf diesem Wege das Verfahren zu vereinfachen und den Energiebedarf zu senken.

Erfindungsgemäß wird dieses Ziel in allen Ausführungsformen durch eine bestimmte Verwendung von Einzelplatten in Form abgekanteter Blechtafeln erreicht.

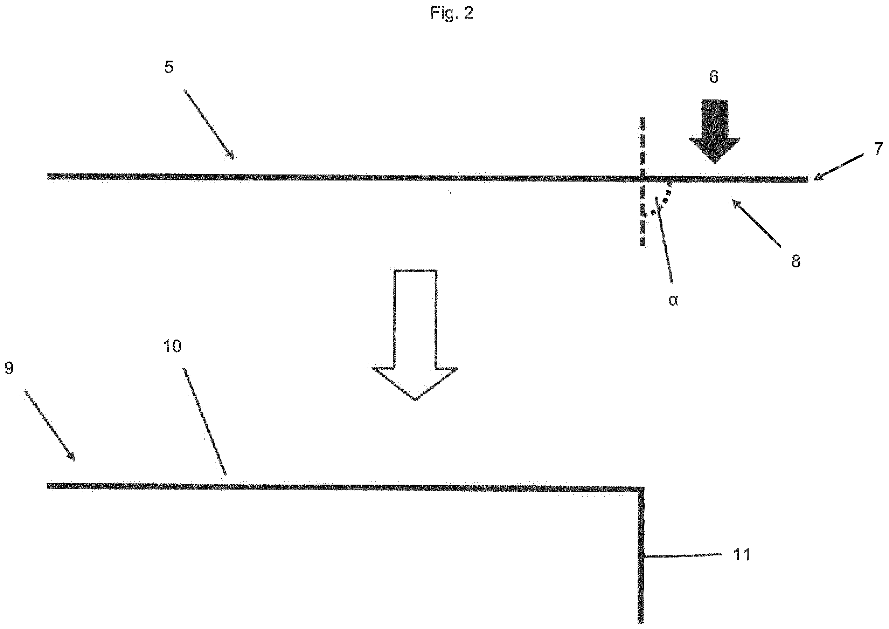

In diesem Sinne zeigt Figur 2 in schematischer Darstellung einen Teil des erfindungsgemäßen Verfahrens zur Herstellung eines Plattenwärmetauschers gemäß einer ersten Ausführungsform.

Abgebildet ist eine ebene Blechtafel 5 in Seitenansicht. Durch Anlegen einer in Richtung der Flächennormalen wirkenden Kraft 6 auf den an eine Längskante 7 der Blechtafel 5 angrenzenden Randbereich 8 wird der Randbereich der Blechtafel 5 um den Biegewinkel α gebogen. Vorliegend wird abgekantet, bis der Biegewinkel α von 90° erreicht ist. Der Randbereich 8 erstreckt sich zwischen der senkrechten gestrichelten Linie und der Längskante 7.

Ergebnis der Abkantung ist die dargestellte Einzelplatte 9. Die Einzelplatte 9 weist einen verbleibenden ebenen Flächenteil 10 und einen Falz 11, vorliegend einen Stehfalz, auf.

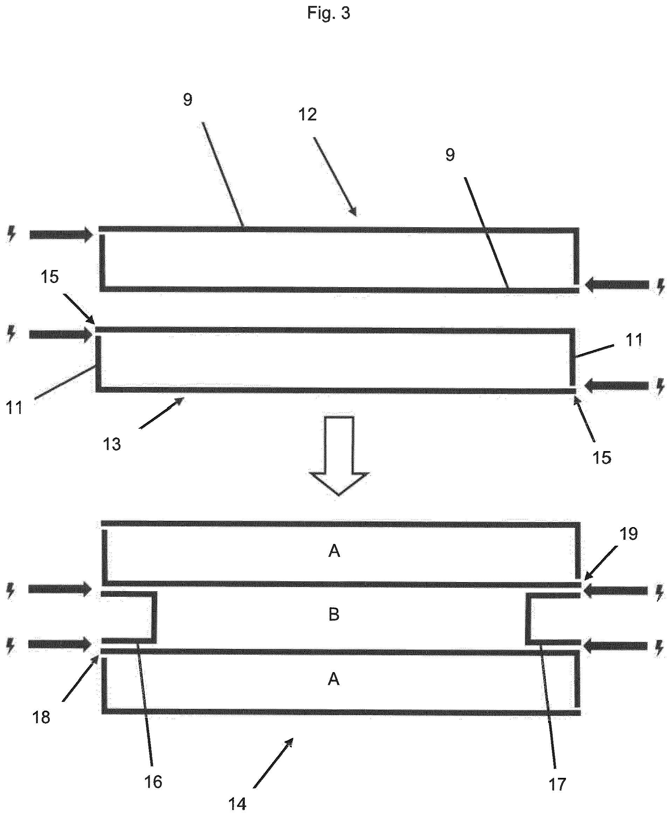

Aus den gemäß Figur 2 hergestellten Einzelplatten 9 werden gemäß der in Figur 3 dargestellten ersten Ausführungsform der Erfindung zunächst Plattenpaare 12, 13 gebildet.

Hierzu werden zwei Einzelplatten 9 jeweils in Form einer der zuvor abgekanteten Blechtafeln 5 in Stapelrichtung des späteren Plattenstapels 14 übereinander angeordnet und miteinander verschweißt. Mit Bezug auf die Bildebene entspricht die Stapelrichtung des Plattenstapels 14 der Höhenrichtung.

Die beiden Einzelplatten 9 werden mit ihren jeweiligen Falzen 11 einander zugewandt, so dass eine Falz 11 der einen Einzelplatte 9 einer freien Randkante 15 der anderen Einzelplatte 9 zugeordnet wird und wobei die beiden Einzelplatten 9 entlang ihrer jeweiligen Falzen 11 und der damit zusammenwirkenden freien Randkanten 15 miteinander verschweißt werden.

Zu erkennen ist, dass durch die erfindungsgemäße Ausbildung und Anordnung der Einzelplatten 9 zu Plattenpaaren 12, 13 zur pro Plattenpaar 12, 13 nur noch zwei Schweißungen 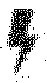 an den mit schwarzen Pfeilen markierten Stellen zur Bildung eines Strömungskanals erforderlich sind. Im Stand der Technik gemäß Figur 1 sind hierzu wenigstens vier Schweißungen erforderlich.

Im nächsten Schritt werden wie in Figur 3 dargestellt, die verschweißten Plattenpaare 12, 13 unter Zwischenordnung von zwei Abstandshaltern 16, 17 zu einem Plattenstapel 14 miteinander verbunden. Dabei werden wenigstens zwei Plattenpaare 12, 13 in Stapelrichtung des späteren Plattenstapels 14 übereinander angeordnet und miteinander verschweißt. Zu diesem Zweck werden die beiden Plattenpaare 12, 13 unter Zwischenordnung eines entlang einer ersten Längskante 18 verlaufenden ersten Abstandshalters 16 und eines entlang einer zweiten Längskante 19 verlaufenden zweiten Abstandshalters 17 übereinander angeordnet. Anschließend werden die Abstandshalter 16, 17 jeweils mit den dazu benachbarten Plattenpaaren 12, 13 verschweißt. Die längskanten 18, 19 werden vorliegend durch die jeweiligen freien Randkanten 15 gebildet.

Die Abstandshalter 16, 17 sind vorliegend als stangenartige Profile mit C-förmigem Querschnitt gebildet. Die Abstandshalter 16, 17 sind aus dem gleichen Material gebildet wie die Blechtafeln 5. Vorzugsweise werden die Abstandshalter 16, 17 zuvor aus einer Blechtafel 5 durch Schneiden und Abkanten gebildet.

Im Vergleich zum Stand der Technik sind durch Anwendung des erfindungsgemäßen Verfahrens zur Ausbildung von drei Strömungskanälen A-B-A signifikant weniger Schweißungen erforderlich. Während im Stand der Technik hierfür insgesamt 12 Schweißungen benötigt werden, kommt das erfindungsgemäße Verfahren gemäß der ersten Ausführungsform mit lediglich acht Schweißungen aus. Die entspricht einer Reduktion von Schweißungen und der dafür erforderlichen Energie von ca. 33 %.

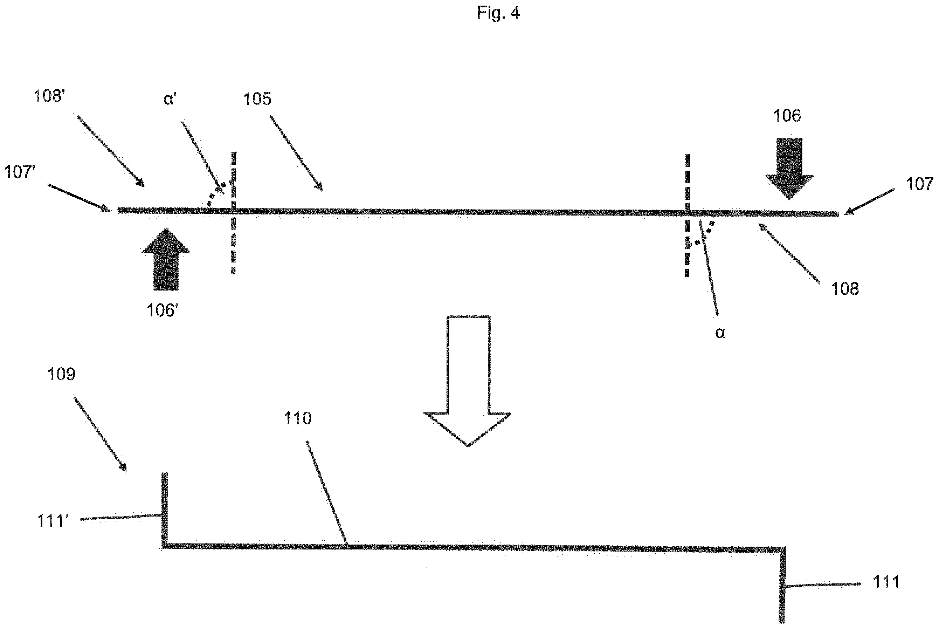

Figur 4 zeigt in schematischer Darstellung einen Teil des erfindungsgemäßen Verfahrens zur Herstellung eines Plattenwärmetauschers gemäß einer zweiten Ausführungsform.

Abgebildet ist eine ebene Blechtafel 105 in Seitenansicht. Die Blechtafel 105 kann identisch zu der Blechtafel 5 sein.

Durch Anlegen einer in Richtung der Flächennormalen wirkenden Kraft 106 auf den an eine einendseitige Längskante 107 der Blechtafel 105 angrenzenden Randbereich 108 wird der Randbereich 108 der Blechtafel 105 um den Biegewinkel α relativ zur in Figur 4 horizontal verlaufenden Tafelebene nach unten gebogen. Vorliegend wird abgekantet, bis der Biegewinkel α von 90° erreicht ist.

Durch Anlegen einer in Richtung der Flächennormalen wirkenden Kraft 106` auf den an eine andernendseitige Längskante 107' der Blechtafel 105 angrenzenden Randbereich 108' wird der Randbereich 108' der Blechtafel 105 um den Biegewinkel α' relativ zur in Figur 4 horizontal verlaufenden Tafelebene nach oben gebogen. Vorliegend wird abgekantet, bis der Biegewinkel α' von 90° erreicht ist. Die Randbereiche 108, 108' werden mithin relativ zur Tafelebene in entgegengesetzter Richtung abgekantet.

Ergebnis der Abkantung ist die dargestellte Einzelplatte 109. Die Einzelplatte 109 weist einen verbleibenden ebenen Flächenteil 110 auf, welcher sich zwischen zwei beidendseitig verlaufenden Falzen 111, 111', vorliegend Stehfalzen, erstreckt. Die Falzen 111, 111' erstrecken sich ausgehend von dem ebenen Flächenteil 110 in entgegengesetzter Richtung vom Flächenteil 110 jeweils im rechten Winkel von diesem weg.

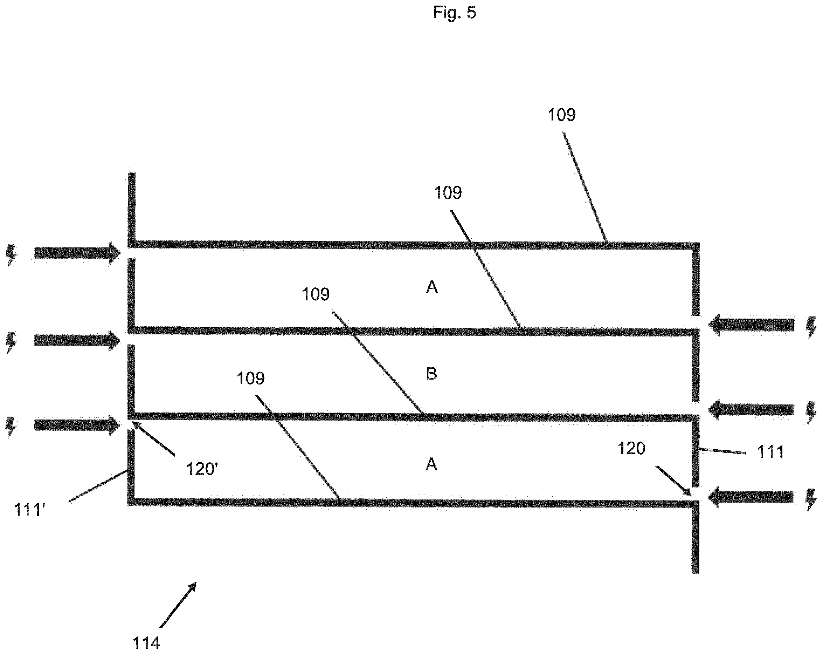

Aus den gemäß Figur 4 hergestellten Einzelplatten 109 wird gemäß der in Figur 5 dargestellten zweiten Ausführungsform der Erfindung ein Plattenstapel 114 gebildet.

Hierzu werden die Einzelplatten 109 jeweils in Form einer der zuvor beidseitig abgekanteten Blechtafeln 105 in Stapelrichtung des späteren Plattenstapels 114 übereinander angeordnet und miteinander verschweißt. Mit Bezug auf die Bildebene entspricht die Stapelrichtung des Plattenstapels 114 der Höhenrichtung.

Vorzugsweise werden bei diesem Verfahrensschritt sämtliche den späteren Plattenstapel 114 bildenden Einzelplatten 109 in einer nicht dargestellten Positioniereinrichtung übereinander angeordnet und anschließend verschweißt. Dabei wird wenigstens ein Teil der mit einem schwarzen Pfeil markierten Schweißstellen gleichzeitig verschweißt. Vorzugsweise können alle Schweißstellen im Plattenstapel 114 gleichzeitig verschweißt werden. Hierdurch wird das Verfahren in vorteilhafter Weise einerseits beschleunigt. Andererseits werden Materialspannungen im späteren Plattenstapel 114 dadurch vermieden, dass ein Teil der Schweißstellen oder alle Schweißstellen zur gleichen Zeit den gleichen Temperaturen ausgesetzt sind.

Die Einzelplatten 109 werden mit ihren jeweiligen Falzen 111, 111' einander zugewandt, so dass eine Falz 111 einer Einzelplatte 109 einer freien Biegekante 120 der anderen Einzelplatte 109 zugeordnet wird und dass eine Falz 111' der einen Einzelplatte 109 einer freien Biegekante 120` der anderen Einzelplatte 109 zugeordnet wird. Die Einzelplatten 109 werden sodann entlang ihrer jeweiligen Falzen 111, 111' und der damit zusammenwirkenden jeweiligen freien Biegekanten 120, 120` miteinander verschweißt.

Zu erkennen ist, dass durch die erfindungsgemäße Ausbildung und Anordnung der Einzelplatten 109 zu einem Plattenstapel 114 nur noch zwei Schweißungen 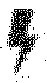 für die Verbindung von zwei Einzelplatten an den mit schwarzen Pfeilen markierten Stellen zur Bildung eines Strömungskanals erforderlich sind. Im Stand der Technik gemäß Figur 1 sind hierzu wenigstens vier Schweißungen erforderlich.

Mit Bezug auf die Bildung eines Plattenstapels im Stand der Technik sind durch Anwendung des erfindungsgemäßen Verfahrens zur Ausbildung von drei Strömungskanälen A-B-A signifikant weniger Schweißungen erforderlich. Während im Stand der Technik hierfür insgesamt 12 Schweißungen benötigt werden, kommt das erfindungsgemäße Verfahren gemäß der zweiten Ausführungsform mit lediglich sechs Schweißungen aus. Die entspricht einer Reduktion von Schweißungen und der dafür erforderlichen Energie von 50 %.

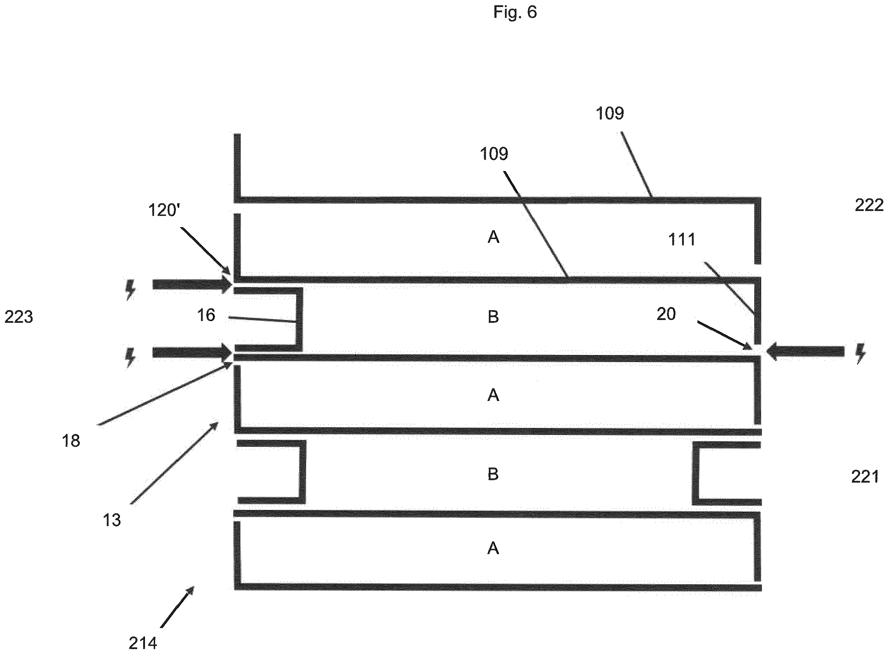

Figur 6 zeigt eine dritte Ausführungsform der Erfindung. Hierbei wird zunächst ein mit Bezug auf die Stapelrichtung des Plattenstapels 214 unterer Teil 221 des Plattenstapels 214 gemäß der ersten Ausführungsform des erfindungsgemäßen Verfahrens (Figuren 2 und 3) gebildet. Anschließend wird der in Stapelrichtung des Plattenstapels 214 oberer Teil 222 des Plattenstapels 214 gemäß der zweiten Ausführungsform des erfindungsgemäßen Verfahrens gebildet (Figuren 4 und 5).

Dazu wird ein Verbindungsbereich 223 zwischen den beiden Teilen 221, 222 geschaffen. Hierbei wird ein gemäß der ersten Ausführungsform gebildetes Plattenpaar 13 mit einer gemäß der zweiten Ausführungsform gebildeten beidseitig abgekanteten Einzelplatte 109 unter Zwischenordnung nur eines Abstandshalters 16 an den mit schwarzen Pfeilen versehenen Schweißstellen miteinander verschweißt.

Insbesondere werden das Plattenpaar 13 und die beidseitig abgekantete Einzelplatte 109 in Stapelrichtung des späteren Plattenstapels 214 übereinander angeordnet und miteinander verschweißt. Dabei werden das Plattenpaar 13 und die Einzelplatte 109 unter Zwischenordnung eines entlang einer ersten Längskante verlaufenden Abstandshalters 16 und eines entlang einer zweiten Längskante verlaufenden Falz 111 der Einzelplatte 109 übereinander angeordnet. Danach wird der Abstandshalter 16 mit dem Plattenpaar 13 einerseits und dem freien Biegerand 120' der Einzelplatte 109 andererseits verschweißt. Ferner wird der Falz 111 der Einzelplatte 109 mit der freien Biegekante 20 des Plattenpaars 13 verschweißt.

Im Anschluss daran wird der obere Teil 222 des Plattenstapels 214 gemäß der in Figuren 4 und 5 beschriebenen zweiten Ausführungsform des erfindungsgemäßen Verfahrens gebildet.

Der untere Teil 221 des dermaßen gebildeten Plattenstapels 214 weist eine erhöhte mechanische Stabilität auf. Der in Stapelrichtung obere Teil 222 des Plattenstapels 214 weist demgegenüber ein vergleichsweise geringes Gewicht auf. Insgesamt wird durch diese Verfahrensführung ein mechanisch besonders stabiler Plattenstapel 214 gebildet. Vorliegend werden die ebenen Blechtafeln 5, 105 derart bemessen und abgekantet, dass die einander zugewandten verbleibenden ebenen Flächenteile 10, 110 der einseitig und beidseitig abgekanteten Einzelplatten 9, 109 identische Abmessungen aufweisen.

Auch diese Ausgestaltung weist gegenüber dem aus dem Stand der Technik bekannten Verfahren eine reduzierte Anzahl von erforderlichen Schweißungen 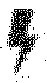 auf.

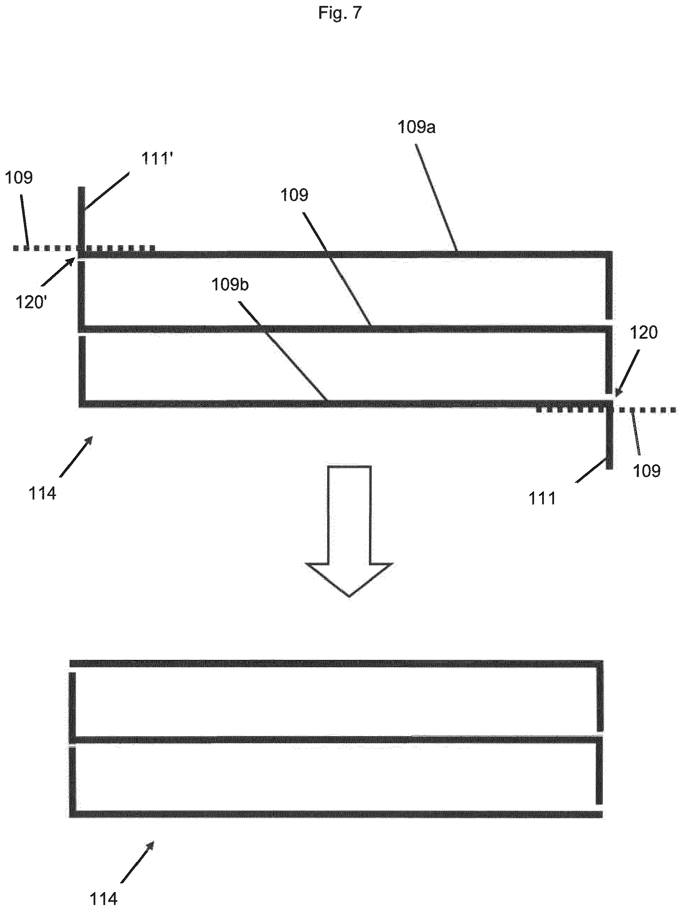

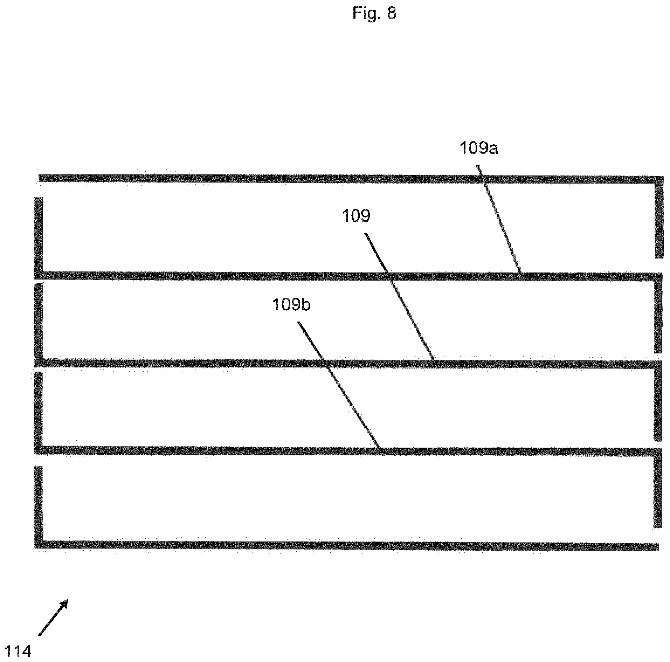

Sofern der Plattenstapel 114, 214 gemäß der zweiten oder dritten Ausführungsform des erfindungsgemäßen Verfahrens gebildet ist, besteht ein weiterer Verfahrensschritt im Abschließen des Plattenstapels 114, 214. Dies kann prinzipiell auf zwei verschiedene Arten erfolgen, die schematisch in den Figuren 7 und 8 dargestellt sind.

Gemäß einer ersten in Figur 7 am Beispiel des Plattenstapels 114 dargestellten Möglichkeit werden die sich vom Plattenstapel 114 weg erstreckenden Falze 111, 111' der beiden in Stapelrichtung des Plattenstapels 114 äußersten Einzelplatten 109a, 109b des Plattenstapels 114 auf die Höhe der anliegenden freien Biegekante 120, 120' abgelängt. Dies wird vorliegend mit der in Stapelrichtung obersten Einzelplatte 109a und der untersten Einzelplatte 109b zur beidendseitigen und vollständigen Abschließung des Plattenstapels 114 durchgeführt.

Hierdurch wird sichergestellt, dass die Einzelplatten 109a, 109b keine überstehenden Falze aufweisen, wodurch die Verletzungsgefahr für den Benutzer und die Einbauhöhe des Plattenstapels 114 reduziert werden. Vorzugsweise kann auf verschiedene Arten abgelängt werden. Bevorzugt mittels Schneiden, Fräsen, Sägen und/oder Schleifen.

Gemäß einer in Figur 8 am Beispiel des Plattenstapels 114 dargestellten Möglichkeit, werden nach dem Vorbild des in Figur 2 dargestellten Verfahrensschritts zunächst zwei zusätzliche Einzelplatten 109c hergestellt, indem Blechtafeln entlang nur einer in Längsrichtung verlaufenden Randkante abgekantet werden. Die Einzelplatten 109c dienen vorliegend als Abschlussplatten.

Anschließend wird der Plattenstapel 114 vorliegend beidendseitig abgeschlossen, indem die jeweilige Abschlussplatte 109c mit jeweils der in Stapelrichtung des Plattenstapels 114 obersten Einzelplatte 109a und der untersten Einzelplatte 109b mit ihren jeweiligen Falzen 111, 111' einander zugewandt werden, so dass die Falz 111, 111' einer Abschlussplatte 109c einer freien Biegekante 120, 120' der jeweiligen Einzelplatte 109a, 109b zugeordnet wird und so dass die Falz 111, 111' der jeweiligen Einzelplatte 109a, 109b der freien Randkanten 115 der Abschlussplatten 109c zugeordnet wird, wobei die Abschlussplatten 109c und die Einzelplatten 109a, 109b entlang ihrer jeweiligen Falze 111, 111' und der damit jeweils zusammenwirkenden freien Biegekanten 120, 120' oder freien Randkanten 115 miteinander verschweißt werden. Hierdurch wird sichergestellt, dass der Plattenstapel 114 keine überstehenden Falze 111, 111' aufweist, wodurch die Verletzungsgefahr für den Benutzer und die Einbauhöhe des Plattenstapels 114 reduziert werden.

Auch eine Kombination beider in den Figuren 7 und 8 dargestellten Möglichkeiten ist möglich, indem beispielsweise der überstehende Falz 111 der untersten Einzelplatte 109b gemäß der ersten Ausführungsform abgelängt wird und auf die oberste beidseitig abgekantete Einzelplatte 109a eine einseitig abgekantete Abschlussplatte 109c aufgeschweißt wird.

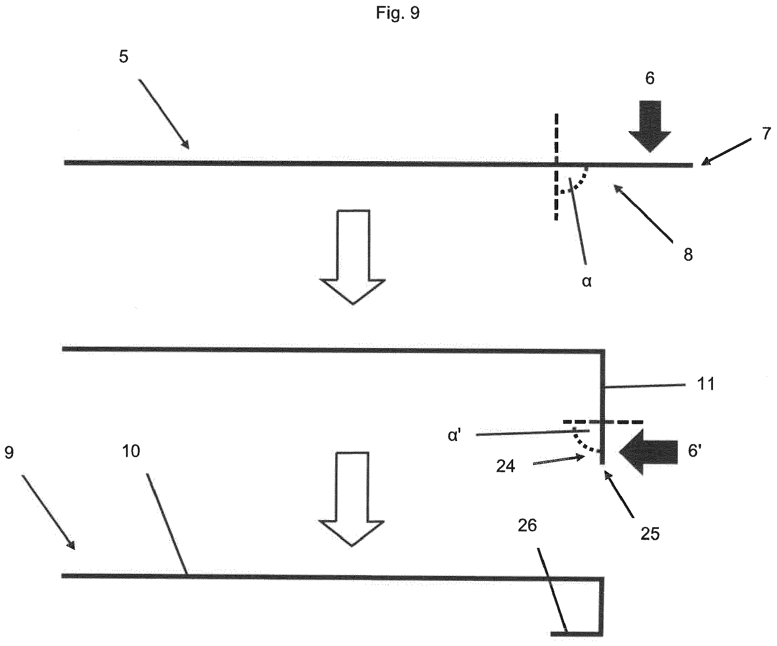

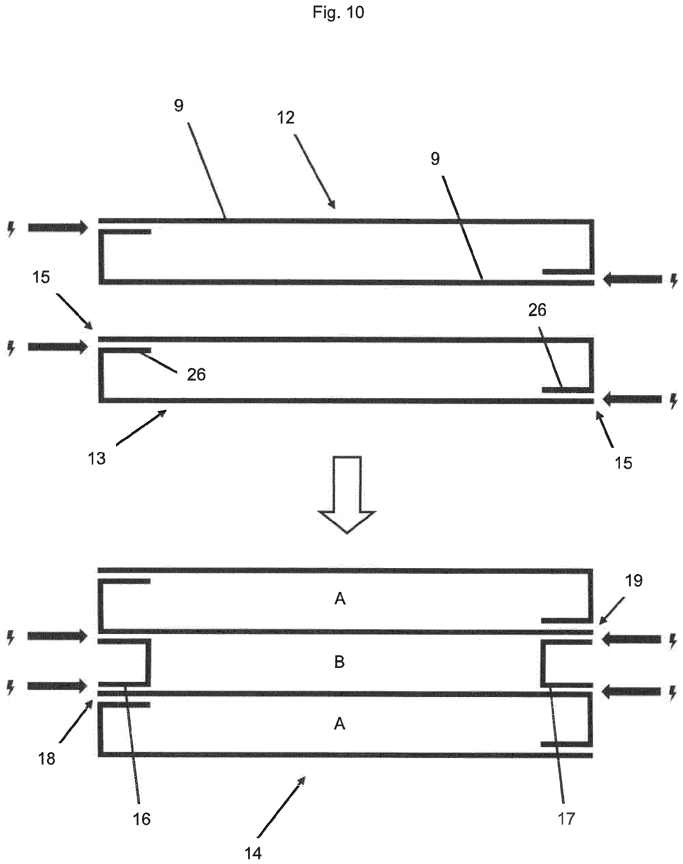

Die Figuren 9 und 10 zeigen in schematischer Darstellung ein weiteres Ausführungsbeispiel des erfindungsgemäßen Verfahrens zur Herstellung eines Plattenwärmetauschers gemäß der ersten Ausführungsform.

In Figur 9 ist eine ebene Blechtafel 5 in Seitenansicht abgebildet. Durch Anlegen einer in Richtung der Flächennormalen wirkenden Kraft 6 auf den an eine Längskante 7 der Blechtafel 5 angrenzenden Randbereich 8 wird der Randbereich der Blechtafel 5 um den Biegewinkel α gebogen. Vorliegend wird abgekantet, bis der Biegewinkel α von 90° erreicht ist.

Zwischenergebnis der Abkantung ist eine einendseitig abgekantete Blechtafel 5. Die Blechtafel 5 weist einen verbleibenden ebenen Flächenteil 10 und einen Falz 11, vorliegend einen Stehfalz, auf.

Zur Verbesserung der mechanischen Stabilität des resultierenden Plattenstapels 14 und einer Vereinfachung der Schweißungen wird ein Randbereich 24 des Falzes 11 der Blechtafel 5 entlang seiner in Längsrichtung verlaufenden freien Randkante 25 zur Erzeugung einer Kontaktfläche 26 mit wenigstens einer benachbarten Einzelplatte abgekantet. Der Randbereich 24 erstreckt sich zwischen der freien Randkante 25 und der gestrichelten horizontal verlaufenden Linie.

Vorliegend wird der Falz bezogen auf die jeweilige Flächennormale in gleicher Richtung der ersten Abkantung mit einer Kraft 6' gebogen. Ferner wird vorliegend mit einem Biegewinkel α' von 90° abgekantet. Der Biegewinkel α' entspricht damit dem Biegewinkel α der ersten Abkantung. Hierdurch resultiert eine Einzelplatte 9 mit einem ebenen Flächenteil 10 und einem Falz 11, wobei der Falz eine Kontaktfläche 26 aufweist, welche sich parallel zum verbleibenden ebenen Flächenteil 10 nach innen erstreckt.

Aus den gemäß Figur 9 hergestellten Einzelplatten 9 werden gemäß der Darstellung in Figur 10 gemäß der ersten Ausführungsform der Erfindung zunächst Plattenpaare 12, 13 gebildet.

Hierzu werden zwei Einzelplatten 9 jeweils in Form einer der zuvor abgekanteten Blechtafeln 5 in Stapelrichtung des späteren Plattenstapels 14 übereinander angeordnet und miteinander verschweißt. Mit Bezug auf die Bildebene entspricht die Stapelrichtung des Plattenstapels 14 der Höhenrichtung.

Die beiden Einzelplatten 9 werden mit ihren jeweiligen Kontaktflächen 26 einander zugewandt, so dass eine Kontaktfläche 26 der einen Einzelplatte 9 einer freien Randkante 15 der anderen Einzelplatte 9 zugeordnet wird und wobei die beiden Einzelplatten 9 entlang ihrer jeweiligen Kontaktflächen 26 und der damit zusammenwirkenden freien Randkanten 15 miteinander verschweißt werden.

Im nächsten Schritt werden wie in Figur 10 dargestellt, die verschweißten Plattenpaare 12, 13 unter Zwischenordnung von zwei Abstandshaltern 16, 17 zu einem Plattenstapel 14 miteinander verbunden. Dabei werden wenigstens zwei Plattenpaare 12, 13 in Stapelrichtung des späteren Plattenstapels 14 übereinander angeordnet und miteinander verschweißt. Zu diesem Zweck werden die beiden Plattenpaare 12, 13 unter Zwischenordnung eines entlang einer ersten Längskante 18 verlaufenden ersten Abstandshalters 16 und eines entlang einer zweiten Längskante 19 verlaufenden zweiten Abstandshalters 17 übereinander angeordnet. Anschließend werden die Abstandshalter 16, 17 jeweils mit den dazu benachbarten Plattenpaaren 12, 13 verschweißt. Die Längskanten 18, 19 werden vorliegend durch die jeweiligen freien Randkanten 15 gebildet.

Die Abstandshalter 16, 17 sind vorliegend als stangenartige Profile mit C-förmigem Querschnitt gebildet. Die Abstandshalter 16, 17 sind aus dem gleichen Material gebildet wie die Blechtafeln 5. Vorzugsweise werden die Abstandshalter 16, 17 zuvor aus einer Blechtafel 5 durch Schneiden und Abkanten gebildet.

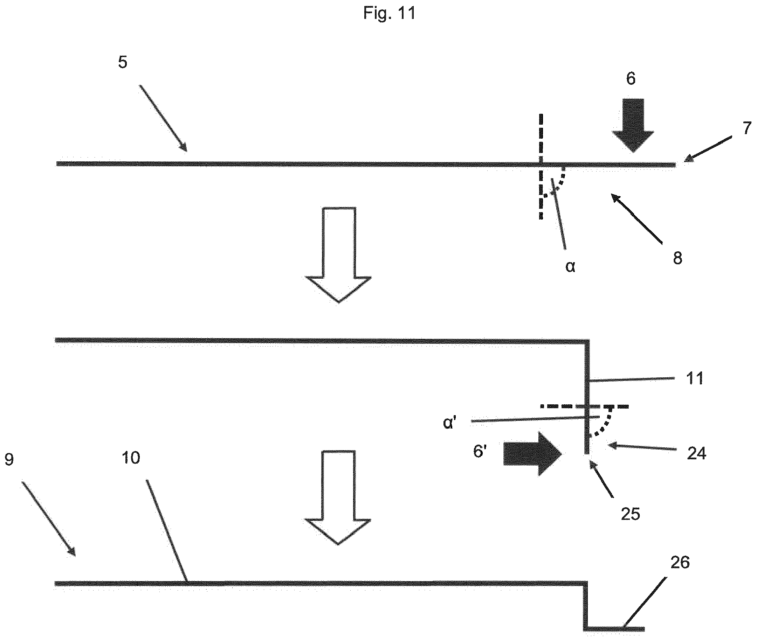

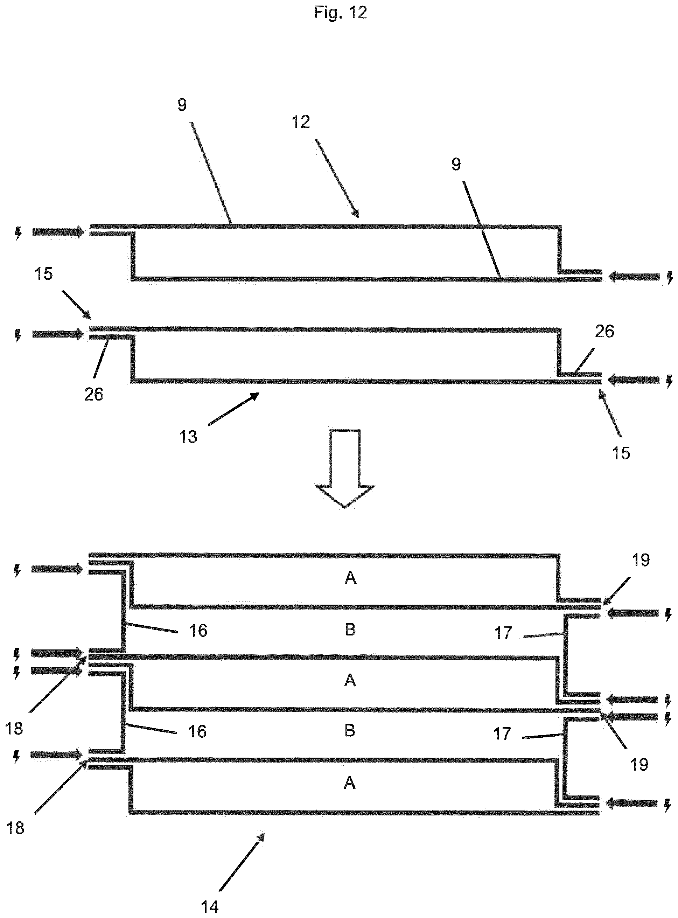

Die Figuren 11 und 12 zeigen in schematischer Darstellung ein weiteres Ausführungsbeispiel des erfindungsgemäßen Verfahrens zur Herstellung eines Plattenwärmetauschers gemäß der ersten Ausführungsform.

In Figur 11 ist eine ebene Blechtafel 5 in Seitenansicht abgebildet. Durch Anlegen einer in Richtung der Flächennormalen wirkenden Kraft 6 auf den an eine Längskante 7 der Blechtafel 5 angrenzenden Randbereich 8 wird der Randbereich der Blechtafel 5 um den Biegewinkel α gebogen. Vorliegend wird abgekantet, bis der Biegewinkel α von 90° erreicht ist.

Zwischenergebnis der Abkantung ist eine einendseitig abgekantete Blechtafel 5. Die Blechtafel 5 weist einen verbleibenden ebenen Flächenteil 10 und einen Falz 11, vorliegend einen Stehfalz, auf.

Zur Verbesserung der mechanischen Stabilität des resultierenden Plattenstapels 14 und einer Vereinfachung der Schweißungen wird ein Randbereich 24 des Falzes 11 der Blechtafel 5 entlang seiner in Längsrichtung verlaufenden freien Randkante 25 zur Erzeugung einer Kontaktfläche 26 mit wenigstens einer benachbarten Einzelplatte abgekantet werden. Der Randbereich 24 erstreckt sich zwischen der freien Randkante 25 und der gestrichelten horizontal verlaufenden Linie.

Vorliegend wird der Falz bezogen auf die jeweilige Flächennormale in entgegengesetzter Richtung der ersten Abkantung gebogen. Ferner wird vorliegend mit einem Biegewinkel α' von 90° abgekantet. Der Biegewinkel α` entspricht damit dem Biegewinkel α der ersten Abkantung. Hierdurch resultiert eine Einzelplatte 9 mit einem ebenen Flächenteil 10 und einem Falz 11, wobei der Falz eine Kontaktfläche 26 aufweist, welche sich von dem verbleibenden ebenen Flächenteil 10 in gleicher Richtung weg erstreckt.

Aus den gemäß Figur 11 hergestellten Einzelplatten 9 werden gemäß der Darstellung in Figur 12 gemäß der ersten Ausführungsform der Erfindung zunächst Plattenpaare 12, 13 gebildet.

Hierzu werden zwei Einzelplatten 9 jeweils in Form einer der zuvor abgekanteten Blechtafeln 5 in Stapelrichtung des späteren Plattenstapels 14 übereinander angeordnet und miteinander verschweißt. Mit Bezug auf die Bildebene entspricht die Stapelrichtung des Plattenstapels 14 der Höhenrichtung.

Die beiden Einzelplatten 9 werden mit ihren jeweiligen Kontaktflächen 26 einander zugewandt, so dass eine Kontaktfläche 26 der einen Einzelplatte 9 einer freien Randkante 15 der anderen Einzelplatte 9 zugeordnet wird und wobei die beiden Einzelplatten 9 entlang ihrer jeweiligen Kontaktflächen 26 und der damit zusammenwirkenden freien Randkanten 15 miteinander verschweißt werden.

Im nächsten Schritt werden wie in Figur 12 dargestellt, die verschweißten Plattenpaare 12, 13 unter Zwischenordnung von zwei Abstandshaltern 16, 17 zu einem Plattenstapel 14 miteinander verbunden. Dabei werden wenigstens zwei Plattenpaare 12, 13 in Stapelrichtung des späteren Plattenstapels 14 übereinander angeordnet und miteinander verschweißt. Zu diesem Zweck werden die beiden Plattenpaare 12, 13 unter Zwischenordnung eines entlang einer ersten Längskante 18 verlaufenden ersten Abstandshalters 16 und eines entlang einer zweiten Längskante 19 verlaufenden zweiten Abstandshalters 17 übereinander angeordnet. Anschließend werden die Abstandshalter 16, 17 jeweils mit den dazu benachbarten Plattenpaaren 12, 13 verschweißt. Die Längskanten 18, 19 werden vorliegend durch die jeweiligen freien Randkanten 15 gebildet.

Die Abstandshalter 16, 17 sind vorliegend als stangenartige Profile mit C-förmigem Querschnitt gebildet. Die Abstandshalter 16, 17 sind aus dem gleichen Material gebildet wie die Blechtafeln 5. Vorzugsweise werden die Abstandshalter 16, 17 zuvor aus einer Blechtafel 5 durch Schneiden und Abkanten gebildet.

Durch die Form der Einzelplatten 9 mit dem sich vom ebenen Flächenteil 10 weg erstreckenden Kontaktbereich 26 sowie deren besonderer Anordnung wird die Schweißung entscheidend erleichtert. Dies deshalb, da sich die Verbindungsbereiche zwischen Kontaktbereich 26 und der freien Randkante 15 zur Bildung der Plattenpaare einerseits und zwischen den Abstandshaltern 16,17 und der freien Randkante 15 andererseits vom Plattenstapel weg erstrecken und damit für Schweißwerkzeuge leichter zugänglich sind.

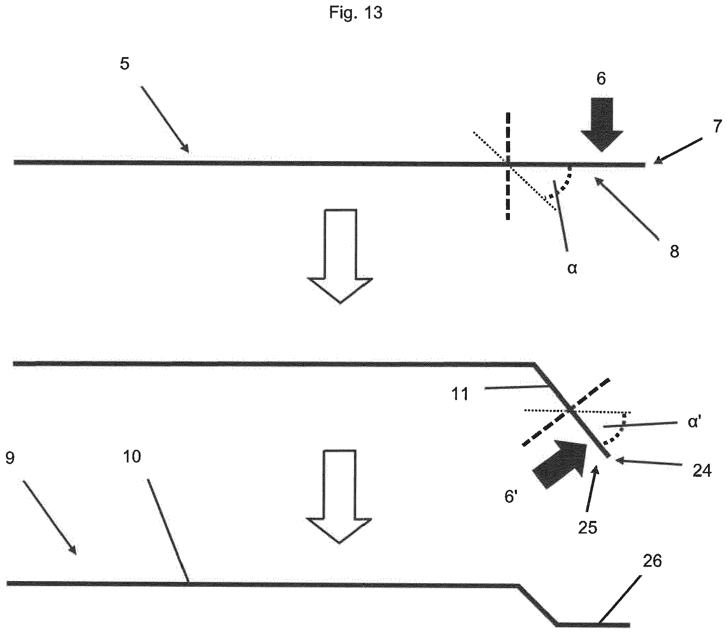

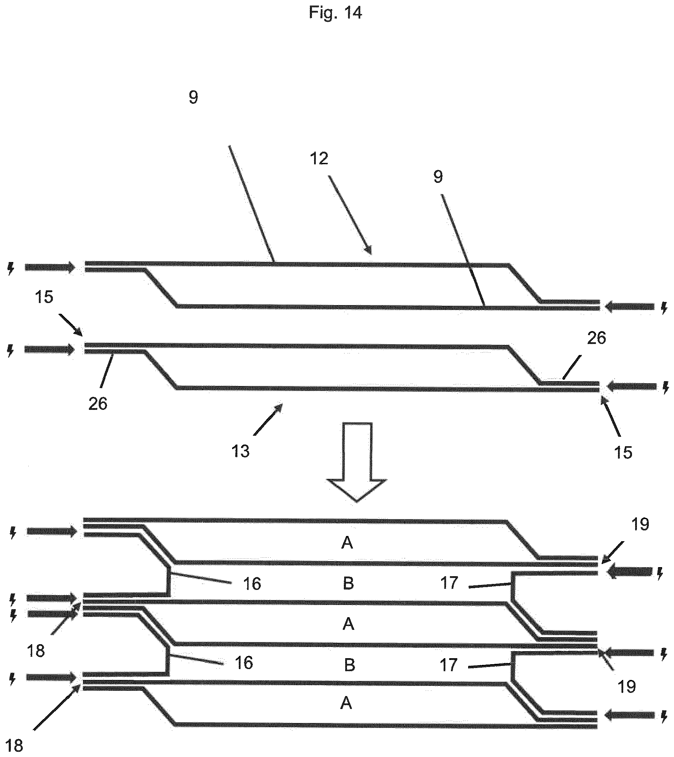

Die Figuren 13 und 14 zeigen in schematischer Darstellung ein weiteres Ausführungsbeispiel des erfindungsgemäßen Verfahrens zur Herstellung eines Plattenwärmetauschers gemäß der ersten Ausführungsform.

In Figur 13 ist eine ebene Blechtafel 5 in Seitenansicht abgebildet. Durch Anlegen einer in Richtung der Flächennormalen wirkenden Kraft 6 auf den an eine Längskante 7 der Blechtafel 5 angrenzenden Randbereich 8 wird der Randbereich der Blechtafel 5 um den Biegewinkel α gebogen. Vorliegend wird abgekantet, bis der Biegewinkel α von 30° bis 50°, vorzugsweise 35°, 40°, 45° oder 50°, vorliegend 45° erreicht ist.

Zwischenergebnis der Abkantung ist eine einendseitig abgekantete Blechtafel 5. Die Blechtafel 5 weist einen verbleibenden ebenen Flächenteil 10 und einen sich im Winkel von 135° zum Flächenteil 10 erstreckenden Falz 11 auf.

Zur Verbesserung der mechanischen Stabilität des resultierenden Plattenstapels 14 und einer Vereinfachung der Schweißungen wird ein Randbereich 24 des Falzes 11 der Blechtafel 5 entlang seiner in Längsrichtung verlaufenden freien Randkante 25 zur Erzeugung einer Kontaktfläche 26 mit wenigstens einer benachbarten Einzelplatte abgekantet werden. Der Randbereich 24 erstreckt sich zwischen der freien Randkante 25 und der gestrichelten senkrecht zum Falz 11 verlaufenden Linie.

Vorliegend wird der Falz 11 bezogen auf die jeweilige Flächennormale der Randbereiche 8 bzw. 25 in entgegengesetzter Richtung der ersten Abkantung gebogen. Ferner wird mit einem identischen Biegewinkel α' zwischen 30° und 50°, vorzugsweise 35°, 40°, 45° oder 50°, vorliegend von 45° abgekantet. Der Biegewinkel α' entspricht damit dem Biegewinkel α der ersten Abkantung. Hierdurch resultiert eine Einzelplatte 9 mit einem ebenen Flächenteil 10 und einem Falz 11, wobei der Falz eine Kontaktfläche 26 aufweist, welche sich von dem verbleibenden ebenen Flächenteil 10 in gleicher Richtung weg erstreckt.

Aus den gemäß Figur 13 hergestellten Einzelplatten 9 werden gemäß der Darstellung in Figur 14 gemäß der ersten Ausführungsform der Erfindung zunächst Plattenpaare 12, 13 gebildet.

Hierzu werden zwei Einzelplatten 9 jeweils in Form einer der zuvor abgekanteten Blechtafeln 5 in Stapelrichtung des späteren Plattenstapels 14 übereinander angeordnet und miteinander verschweißt. Mit Bezug auf die Bildebene entspricht die Stapelrichtung des Plattenstapels 14 der Höhenrichtung.

Die beiden Einzelplatten 9 werden mit ihren jeweiligen Kontaktflächen 26 einander zugewandt, so dass eine Kontaktfläche 26 der einen Einzelplatte 9 einer freien Randkante 15 der anderen Einzelplatte 9 zugeordnet wird und wobei die beiden Einzelplatten 9 entlang ihrer jeweiligen Kontaktflächen 26 und der damit zusammenwirkenden freien Randkanten 15 miteinander verschweißt werden.

Im nächsten Schritt werden wie in Figur 14 dargestellt, die verschweißten Plattenpaare 12, 13 unter Zwischenordnung von zwei Abstandshaltern 16, 17 zu einem Plattenstapel 14 miteinander verbunden. Dabei werden wenigstens zwei Plattenpaare 12, 13 in Stapelrichtung des späteren Plattenstapels 14 übereinander angeordnet und miteinander verschweißt. Zu diesem Zweck werden die beiden Plattenpaare 12, 13 unter Zwischenordnung eines entlang einer ersten Längskante 18 verlaufenden ersten Abstandshalters 16 und eines entlang einer zweiten Längskante 19 verlaufenden zweiten Abstandshalters 17 übereinander angeordnet. Anschließend werden die Abstandshalter 16, 17 jeweils mit den dazu benachbarten Plattenpaaren 12, 13 verschweißt. Die Längskanten 18, 19 werden vorliegend durch die jeweiligen freien Randkanten 15 gebildet.

Die Abstandshalter 16, 17 sind vorliegend als stangenartige Profile mit komplexem Querschnitt Ein Abstandshalter 16, 17 wird durch dreimaliges Abkanten mit Bezug auf die jeweilige Flächennormale in gleicher Richtung erhalten. Die Abstandshalter 16, 17 sind aus dem gleichen Material gebildet wie die Blechtafeln 5. Vorzugsweise werden die Abstandshalter 16, 17 zuvor aus einer Blechtafel 5 durch Schneiden und Abkanten gebildet. Hinsichtlich der Abkantung wird zunächst um 90° abgekantet. Der gebildete erste Falz wird um 45 ° abgekantet. Der hierdurch gebildete zweite Falz wird erneut um 45 ° abgekantet. Die Biegekanten des Abstandshalters sind dabei beabstandet voneinander ausgebildet und werden hinsichtlich ihrer Position im Querschnitt des Abstandhalters auf den Querschnitt der im Plattenstapel bestimmungsgemäß unmittelbar benachbarten Plattenpaaren 12, 13 abgestimmt. Die Abstimmung erfolgt dabei derart, dass die Abstandshalter 16, 17 eine mit dem Querschnitt der zu verschweißenden Teile der jeweiligen Plattenpaaren 12, 13 wenigstens streckenweise korrespondierende Kontur ausbildet.

Durch die Form der Einzelplatten 9 mit dem sich vom ebenen Flächenteil 10 weg erstreckenden Kontaktbereich 26 sowie deren besonderer Anordnung wird die Schweißung entscheidend erleichtert. Dies deshalb, da sich die Verbindungsbereiche zwischen Kontaktbereich 26 und der freien Randkante 15 zur Bildung der Plattenpaare einerseits und zwischen den Abstandshaltern 16,17 und der freien Randkante 15 andererseits vom Plattenstapel weg erstrecken und damit für Schweißwerkzeuge leichter zugänglich sind. Zusätzlich dazu wird durch die Wahl der Winkel α und α' eine vergleichsweise geringe Bauhöhe pro Strömungskanal erreicht. Hierdurch kann bei gegebener Stapelhöhe des Plattenstapels die Anzahl der Strömungskanäle erhöht werden, wodurch die Effizienz des Plattenwärmetauscher gesteigert wird.

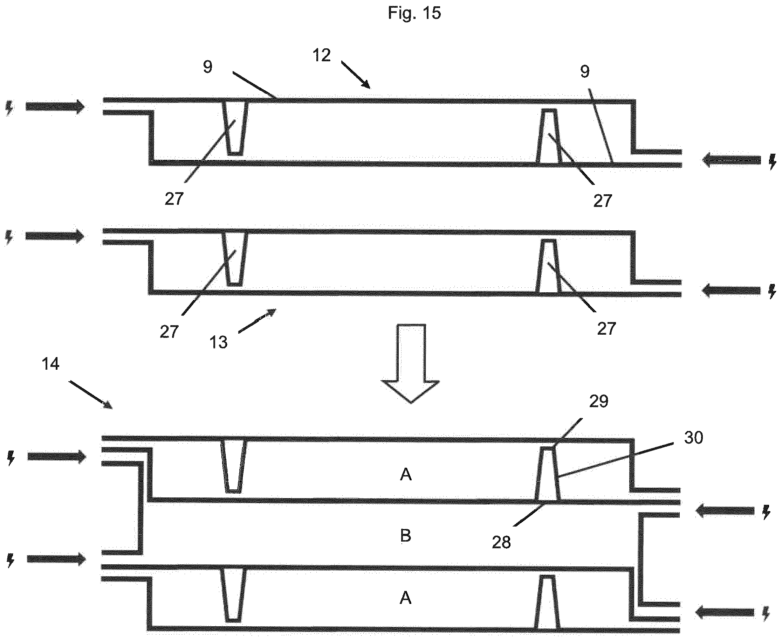

Figur 15 zeigt in schematischer Darstellung ein weiteres Ausführungsbeispiel des erfindungsgemäßen Verfahrens zur Herstellung eines Plattenwärmetauschers gemäß der ersten Ausführungsform.

Gemäß Figur 11 aus Blechtafeln 5 hergestellte Einzelplatten 9 werden mit konischen Metallelementen 27 versehen. Die Länge der Metallelemente 27 wird vorliegend so gewählt, dass sie im Wesentlichen dem Abstand zwischen zwei benachbarten Einzelplatten 9 oder zwei benachbarten Plattenpaaren 12, 13 entspricht. Hierdurch kann eine Wölbung des jeweiligen ebenen Flächenteils 10 in Gänze unterbunden werden. Die Metallelemente 27 wirken daher als Abstandshalter.

Die konischen Metallelemente 27 sind vorliegend nach Art eines Kegelstumpfes ausgebildet. Die Metallelemente 27 weisen jeweils einendseitig eine Grundfläche 28 und andernendseitig eine Deckfläche 29 auf. Umfangsseitig weisen die konischen Metallelemente eine umlaufende Mantelfläche 30 auf, welche Grundfläche und Deckfläche miteinander verbindet.

Die konischen Metallelemente 27 werden jeweils mit ihrer Grundfläche 28 auf den ebenen Flächenteil 10 einer Einzelplatte 9 aufgeschweißt. Vorliegend werden die Einzelplatten 9 nur auf einer Seite des Flächenteils 10 mit konischen Metallelemente 27 bestückt. Auch eine beidseitige Bestückung ist möglich. Eine einseitige Bestückung führt, sofern ausschließlich identische Einzelplatten 9 verwendet werden, gemäß der Verfahrensführung der ersten Ausführungsform des erfindungsgemäßen Verfahrens dazu, dass die Metallelemente 27 nur in Strömungskanälen angeordnet sind, die zwischen Einzelplatten oder zwischen Plattenpaaren 12, 13 ausgebildet sind. Durch beidseitige Bestückung kann demgegenüber bei Verwendung identischer Einzelplatten 9 eine Anordnung von Metallelementen 27 in Strömungskanälen realisiert werden, die zwischen Einzelplatten 9 und zwischen Plattenpaaren 12, 13 ausgebildet sind. Die ausschließliche Verschweißung der Grundfläche 28 mit dem Flächenteil 10 ist in der Regel ausreichend, so dass auf eine zusätzliche Verschweißung der Deckfläche 28 verzichtet werden kann.

Darüber hinaus ist in dieser Ausgestaltung eine relative Verschiebung, beispielsweise in Folge einer temperaturinduzierten Materialbewegung, zwischen den Einzelplatten 9 und/oder den Plattenpaaren 12, 13 möglich, so dass in vorteilhafter Weise Materialspannungen vermieden werden.

### Bezugszeichen

- 1: Plattenwärmetauscher
- 2: Plattenstapel
- 3: Einzelplatte
- 4: Abstandshalter
- 5: Blechtafel
- 6: Kraft
- 7: Längskante
- 8: Randbereich
- 9: Einzelplatte
- 10: verbleibender ebener Flächenteil
- 11: Falz
- 12: Plattenpaar
- 13: Plattenpaar
- 14: Plattenstapel
- 15: freie Randkante
- 16: erster Abstandshalter
- 17: zweiter Abstandshalter
- 18: erste Längskante
- 19: zweite Längskante
- 20: freie Biegekante
- 24: Randbereich
- 25: freie Randkante
- 26: Kontaktfläche
- 27: konisches Metallelement
- 28: Grundfläche
- 29: Deckfläche
- 30: Mantelfläche
- 105: Blechtafel
- 106: Kraft
- 106': Kraft
- 107: Längskante
- 107': Längskante
- 108: Randbereich
- 108': Randbereich
- 109: Einzelplatte
- 110: verbleibender ebener Flächenteil
- 111: Falz
- 111': Falz
- 120: freie Biegekante
- 120`: freie Biegekante
- 214: Plattenstapel
- 221: unterer Teil des Plattenstapels
- 222: oberer Teil des Plattenstapels
- 223: Verbindungsbereich zwischen oberem und unterem Teil des Plattenstapels

## Patentansprüche

1. Verfahren zur Herstellung eines Plattenwärmetauschers aus zu einem Plattenstapel miteinander verbundenen Einzelplatten mit wenigstens den folgenden Verfahrensschritten:
- Bereitstellen von Blechtafeln mit eben ausgebildeten Großflächen,
- Abkanten der Blechtafeln entlang einer in Längsrichtung verlaufenden Randkante, wobei je Blechtafel eine in Längsrichtung verlaufende Falz ausgebildet wird,
- Ausbilden eines Plattenpaares, indem zwei Einzelplatten jeweils in Form einer der zuvor abgekanteten Blechtafeln in Stapelrichtung des späteren Plattenstapels übereinander angeordnet und miteinander verschweißt werden, wobei die beiden Einzelplatten mit ihren jeweiligen Falzen einander zugewandt werden, so dass eine Falz der einen Einzelplatte einer freien Randkante der anderen Einzelplatte zugeordnet wird und wobei die beiden Einzelplatten entlang ihrer jeweiligen Falzen und der damit zusammenwirkenden freien Randkanten miteinander verschweißt werden.
- Ausbilden eines Plattenstapels, indem wenigstens zwei Plattenpaare in Stapelrichtung des späteren Plattenstapels übereinander angeordnet und miteinander verschweißt werden, wobei die beiden Plattenpaare unter Zwischenordnung eines entlang einer ersten Längskante verlaufenden ersten Abstandshalters und eines entlang einer zweiten Längskante verlaufenden zweiten Abstandshalters übereinander angeordnet werden und wobei die Abstandshalter jeweils mit den dazu benachbarten Plattenpaaren verschweißt werden.

2. Verfahren gemäß Anspruch 1, **dadurch gekennzeichnet, dass** Abstandshalter verwendet werden, die wenigstens teilweise aus austenitischem Edelstahl gebildet sind.

3. Verfahren gemäß einem der Ansprüche 1 oder 2, **dadurch gekennzeichnet, dass** längliche Abstandshalter verwendet werden, die einen quaderförmigen Querschnitt, einen L-förmigem Querschnitt, einen C-förmigen und/oder einen komplexen Querschnitt aufweisen.

4. Verfahren zur Herstellung eines Plattenwärmetauschers aus zu einem Plattenstapel miteinander verbundenen Einzelplatten mit wenigstens den folgenden Verfahrensschritten:
- Bereitstellen von Blechtafeln mit eben ausgebildeten Großflächen,
- Abkanten wenigstens eines Teils der Blechtafeln jeweils entlang zweier in Längsrichtung verlaufender gegenüberliegender Randkanten, wobei die beiden Randkanten in entgegengesetzter Richtung abgekantet werden, wobei je Blechtafel zwei parallel zueinander verlaufende und sich auf entgegengesetzten Seiten der Tafelebene erstreckende Falzen ausgebildet werden.
- Ausbilden eines Plattenstapels, indem Einzelplatten jeweils in Form einer der zuvor beidseitig abgekanteten Blechtafeln in Stapelrichtung des späteren Plattenwärmetauschers übereinander angeordnet und miteinander verschweißt werden, wobei die Einzelplatten mit ihren jeweiligen Falzen jeweils in identischer Ausrichtung übereinander angeordnet werden, so dass die Falzen einer Einzelplatte den jeweiligen freien Biegekanten der unmittelbar darüber und darunter angeordneten Einzelplatte zugeordnet werden und wobei die beiden Einzelplatten entlang ihrer jeweiligen Falzen und der damit zusammenwirkenden freien Biegekanten miteinander verschweißt werden.

5. Verfahren gemäß Anspruch 4, **gekennzeichnet durch**:
- Abschließen des Plattenstapels, wobei die sich vom Plattenstapel weg erstreckende Falz wenigstens einer der beiden in Stapelrichtung des Plattenstapels äußersten Einzelplatten des Plattenstapels auf die Höhe der anliegenden freien Biegekante abgelängt wird.

6. Verfahren gemäß einem der Ansprüche 4 oder 5, **gekennzeichnet durch**:
- Abkanten von wenigstens einer zusätzlichen Blechtafel entlang nur einer in Längsrichtung verlaufenden Randkante, wobei je Blechtafel eine in Längsrichtung verlaufende Falz, insbesondere Stehfalz, ausgebildet wird.
- Abschließen des Plattenstapels, indem wenigstens eine Abschlussplatte in Form einer zuvor einseitig abgekanteten Blechtafel mit einer in Stapelrichtung des Plattenstapels äußersten Einzelplatte mit ihren jeweiligen Falzen einander zugewandt werden, so dass die Falz der Abschlussplatte einer freien Biegekante der Einzelplatte zugeordnet wird und so dass die Falz der Einzelplatte der freien Randkante der Abschlussplatte zugeordnet wird, wobei die Abschlussplatte und die Einzelplatten entlang ihrer jeweiligen Falzen und der damit zusammenwirkenden freien Biegekante oder freien Randkante miteinander verschweißt werden.

7. Verfahren gemäß einem der Ansprüche 1 bis 6, **dadurch gekennzeichnet, dass** wenigstens ein Teil der mittels Abkanten erzeugten Falzen der Einzelplatten wenigstens einmal entlang ihrer in Längsrichtung verlaufenden freien Randkanten zur Erzeugung einer Kontaktfläche mit benachbarten Einzelplatten erneut abgekantet werden.

8. Verfahren gemäß einem der Ansprüche 1 bis 7, **dadurch gekennzeichnet, dass** eine Mehrzahl von konisches Metallelementen zwischen benachbarten Einzelplatten und/oder zwischen benachbarten Plattenpaaren angeordnet werden, wobei die Länge der Metallelemente so gewählt wird, dass sie im Wesentlichen dem Abstand zwischen zwei benachbarten Einzelplatten oder zwei benachbarten Plattenpaaren entspricht.

9. Verfahren gemäß Anspruch 8, **dadurch gekennzeichnet, dass** die konischen Metallelemente jeweils mit ihrer Grundfläche auf eine ebene Großfläche einer Einzelplatte aufgeschweißt wird.

10. Verfahren gemäß Anspruch 9, **dadurch gekennzeichnet, dass** die Mehrzahl der konischen Metallelemente in einer regelmäßigen Verteilung zum Teil auf der einen und zum Teil auf der anderen ebenen Großfläche der einander zugewandten Einzelplatten aufgeschweißt wird.

## Geänderte Patentansprüche

### Geänderte Patentansprüche gemäss Regel 137(2) EPÜ.

1. Verfahren zur Herstellung eines Plattenwärmetauschers (1) aus zu einem Plattenstapel (14) miteinander verbundenen Einzelplatten (9) mit wenigstens den folgenden Verfahrensschritten:
- Bereitstellen von Blechtafeln (5) mit eben ausgebildeten Großflächen,
- Abkanten der Blechtafeln (5) entlang einer in Längsrichtung verlaufenden Randkante (7), wobei je Blechtafel (5) eine in Längsrichtung verlaufende Falz (11) ausgebildet wird,
- Ausbilden eines Plattenpaares (12, 13), indem zwei Einzelplatten (9) jeweils in Form einer der zuvor abgekanteten Blechtafeln (5) in Stapelrichtung des späteren Plattenstapels (14) übereinander angeordnet und miteinander verschweißt werden, wobei die beiden Einzelplatten (9) mit ihren jeweiligen Falzen (11) einander zugewandt werden, so dass eine Falz (11) der einen Einzelplatte (9) einer freien Randkante (15) der anderen Einzelplatte (9) zugeordnet wird und wobei die beiden Einzelplatten (9) entlang ihrer jeweiligen Falzen (11) und der damit zusammenwirkenden freien Randkanten (15) miteinander verschweißt werden.
- Ausbilden eines Plattenstapels (14), indem wenigstens zwei Plattenpaare (12, 13) in Stapelrichtung des späteren Plattenstapels (14) übereinander angeordnet und miteinander verschweißt werden, wobei die beiden Plattenpaare (12, 13) unter Zwischenordnung eines entlang einer ersten Längskante (18) verlaufenden ersten Abstandshalters (16) und eines entlang einer zweiten Längskante (19) verlaufenden zweiten Abstandshalters (17) übereinander angeordnet werden und wobei die Abstandshalter (16, 17) jeweils mit den dazu benachbarten Plattenpaaren (12, 13) verschweißt werden, **dadurch gekennzeichnet, dass** längliche Abstandshalter (16, 17) verwendet werden, die einen L-förmigen Querschnitt, einen C-förmigen und/oder einen komplexen Querschnitt aufweisen.

2. Verfahren gemäß Anspruch 1, **dadurch gekennzeichnet, dass** Abstandshalter (16, 17) verwendet werden, die wenigstens teilweise aus austenitischem Edelstahl gebildet sind.

3. Verfahren zur Herstellung eines Plattenwärmetauschers (1) aus zu einem Plattenstapel (114) miteinander verbundenen Einzelplatten (109) mit wenigstens den folgenden Verfahrensschritten:
- Bereitstellen von Blechtafeln (105) mit eben ausgebildeten Großflächen, **gekennzeichnet durch**
- Abkanten wenigstens eines Teils der Blechtafeln (105) jeweils entlang zweier in Längsrichtung verlaufender gegenüberliegender Randkanten (107, 107'), wobei die beiden Randkanten (107, 107') in entgegengesetzter Richtung abgekantet werden, wobei je Blechtafel (105) zwei parallel zueinander verlaufende und sich auf entgegengesetzten Seiten der Tafelebene erstreckende Falzen (111, 111`) ausgebildet werden.
- Ausbilden eines Plattenstapels (114), indem Einzelplatten (109) jeweils in Form einer der zuvor beidseitig abgekanteten Blechtafeln (105) in Stapelrichtung des späteren Plattenwärmetauschers (1) übereinander angeordnet und miteinander verschweißt werden, wobei die Einzelplatten (109) mit ihren jeweiligen Falzen (111, 111') jeweils in identischer Ausrichtung übereinander angeordnet werden, so dass die Falzen (111, 111') einer Einzelplatte den jeweiligen freien Biegekanten (120, 120') der unmittelbar darüber und darunter angeordneten Einzelplatte (109) zugeordnet werden und wobei die beiden Einzelplatten (109) entlang ihrer jeweiligen Falzen (111, 111') und der damit zusammenwirkenden freien Biegekanten (120, 120') miteinander verschweißt werden.

4. Verfahren gemäß Anspruch 3, **gekennzeichnet durch**:
- Abschließen des Plattenstapels (114), wobei die sich vom Plattenstapel (114) weg erstreckende Falz (111, 111') wenigstens einer der beiden in Stapelrichtung des Plattenstapels (114) äußersten Einzelplatten (109a, 109b) des Plattenstapels (114) auf die Höhe der anliegenden freien Biegekante (120, 120') abgelängt wird.

5. Verfahren gemäß einem der Ansprüche 3 oder 4, **gekennzeichnet durch**:
- Abkanten von wenigstens einer zusätzlichen Blechtafel (105) entlang nur einer in Längsrichtung verlaufenden Randkante (107, 107'), wobei je Blechtafel (105) eine in Längsrichtung verlaufende Falz (111, 111'), insbesondere Stehfalz, ausgebildet wird.
- Abschließen des Plattenstapels (114), indem wenigstens eine Abschlussplatte (109c) in Form einer zuvor einseitig abgekanteten Blechtafel (105) mit einer in Stapelrichtung des Plattenstapels (114) äußersten Einzelplatte (109a, 109b) mit ihren jeweiligen Falzen (111, 111`) einander zugewandt werden, so dass die Falz (111, 111`) der Abschlussplatte (109c) einer freien Biegekante (120, 120') der Einzelplatte (109a, 109b) zugeordnet wird und so dass die Falz (111, 111') der Einzelplatte (109a, 109b) der freien Randkante (115) der Abschlussplatte (109c) zugeordnet wird, wobei die Abschlussplatte (109c) und die Einzelplatten (109a, 109b) entlang ihrer jeweiligen Falzen (111, 111`) und der damit zusammenwirkenden freien Biegekante (120, 120') oder freien Randkante (115) miteinander verschweißt werden.

6. Verfahren gemäß einem der Ansprüche 1 bis 5, **dadurch gekennzeichnet, dass** wenigstens ein Teil der mittels Abkanten erzeugten Falzen (11, 111, 111') der Einzelplatten (9, 109) wenigstens einmal entlang ihrer in Längsrichtung verlaufenden freien Randkanten (15) zur Erzeugung einer Kontaktfläche mit benachbarten Einzelplatten (9, 109) erneut abgekantet werden.

7. Verfahren gemäß einem der Ansprüche 1 bis 6, **dadurch gekennzeichnet, dass** eine Mehrzahl von konisches Metallelementen (27) zwischen benachbarten Einzelplatten (9, 109) und/oder zwischen benachbarten Plattenpaaren (12, 13) angeordnet werden, wobei die Länge der Metallelemente (27) so gewählt wird, dass sie im Wesentlichen dem Abstand zwischen zwei benachbarten Einzelplatten (9, 109) oder zwei benachbarten Plattenpaaren (12, 13) entspricht.

8. Verfahren gemäß Anspruch 7, **dadurch gekennzeichnet, dass** die konischen Metallelemente (27) jeweils mit ihrer Grundfläche (28) auf eine ebene Großfläche einer Einzelplatte (9, 109) aufgeschweißt wird.

9. Verfahren gemäß Anspruch 8, **dadurch gekennzeichnet, dass** die Mehrzahl der konischen Metallelemente (27) in einer regelmäßigen Verteilung zum Teil auf der einen und zum Teil auf der anderen ebenen Großfläche der einander zugewandten Einzelplatten (9, 109) aufgeschweißt wird.
